# EUROPÄISCHE PATENTANMELDUNG

(11) **EP 1 600 194 A1**
(43) Veröffentlichungstag der Anmeldung: **30.11.2005**
(21) Anmeldenummer: 05011430.5
(22) Anmeldetag: 27.05.2005
(51) Int. Cl.: A62C 3/16, H02G 3/04, F16L 59/14

(54) **Brandschutzelement**

(30) Priorität: 28.05.2004 DE 202004008695 U
(71) Anmelder: Reuter, Martin, 63584 Gruendau (DE)
(72) Erfinder: Reuter, Martin, 63584 Gruendau (DE)
(74) Vertreter: Wolf, Günter

(57) **Zusammenfassung**

Die Erfindung betrifft ein Brandschutzelement, umfassend einen aus Schaumglas bestehenden Körper (1) zur Abdeckung oder Kapselung von Bauelementen (2) wie elektrischen Leitungen, elektischen Geräte, Verteilerdosen, Befestigungselementen von elektischen Leitungen oder Rohren. Nach der Erfindung ist vorgesehen, dass zur Erhöhung der Feuerbeständigkeit des Brandschutzelements der Körper (1) mindestens an seiner dem Bauelement (2) abgewandten Seite mit einer Brandschutzschicht (3) versehen ist.

## Beschreibung

Ein Brandschutzelement der eingangs genannten Art ist nach der DE 101 47 980 A1 bekannt. Dieses besteht aus einem aus Schaumglas gebildeten Körper zur Abdeckung oder Kapselung von Bauelementen wie elektischen Leitungen, elektischen Geräten, Verteilerdosen, Rohren oder dergleichen. Schaumglas ist auch als sogenanntes Foamglas® bekannt (siehe http://www.foamglas.de) und zeichnet sich insbesondere dadurch aus, dass es aus reinem Glas, somit anorganisch und ohne weitere Bindemittel gebildet ist. Foamglas® ist wasserabweisend, hat eine gute Beständigkeit gegen Säuren (Ausnahme Fluorwasserstoffsäure) und ist chemikalienbeständig, inbesondere gegenüber allen organischen Lösungsmitteln. Die Beständigkeit gegenüber Laugen hängt von der Konzentration und der Temperatur ab. Die ökologischen Eigenschaften von Foamglas® sind dadurch gekennzeichnet, dass es nicht fasert, keine ozonabbauenden Treibgase und keine Kunststoffanteile enthält, umweltneutral und baubiologisch unbedenklich ist. Foamglas® ist ohne zusätzliche Sicherungsmaßnahmen als Bauschutt deponierbar oder wiederverwertbar z.B. als Dämmschotter. Darüber hinaus ist es druck- bzw. formstabil und leicht.

Gemäß dem Hersteller von Foamglas® liegen die Anwendungsgrenztemperaturen zwischen -260°C und 430°C. Der Wärmeausdehnungskoeffizient beträgt 8,5 x 10-6 K-1. Foamglas® ist nichtbrennbar nach DIN 4102, Teil 1, Baustoffklasse A 1, Euroklasse A.

Der Isolationskörper gemäß der DE 101 47 980 A1 dient unter anderem zur thermischen Isolierung mindestens eines Bauteils. Unter Berücksichtigung der obigen Angaben hinsichtlich der Anwendungsgrenztemperaturen von Foamglas® bis 430°C eignet er sich allerdings nicht zu Brandschutzzwecken, da in diesem Falle zumindest für eine gewisse Zeit (30, 60 oder 90 Minuten) eine Feuerbeständigkeit bis etwa 1000°C gewährleistet sein muss. Von der Zielsetzung her, dient der Isolationskörper gemäß der DE 101 47 980 A1 aber auch nicht dem Schutz bei einem Brand von außen, sondern soll ist vielmehr dazu bestimmt, die Umgebung vor Wärme des isolierten Bauteils zu schützen.

Der Erfindung liegt die Aufgabe zugrunde, ein Bauelement der eingangs genannten Art dahingehend weiterzubilden, dass dieses auch als Brandschutzelement unter Einhaltung der einschlägigen Normen einsetzbar ist, und zwar insbesondere dahingehend, dass das isolierte Bauteil vor einem Brand geschützt wird.

Diese Aufgabe ist mit einem Element der eingangs genannten Art durch die im Kennzeichen des Patentanspruchs 1 aufgeführten Merkmale gelöst.

Nach der Erfindung ist also vorgesehen, dass der aus Foamglas® bestehende Körper mindestens an seiner dem zu schützenden Bauelement bzw. Bauteil abgewandten Seite mit einer Brandschutzschicht versehen ist.

Als Brandschutzschicht kommt dabei beispiels- und vorzugsweise eine Brandschutzbeschichtungsmasse des Herstellers FLAMRO® in Betracht (siehe http://www.flamro.de und den den Anmeldungsunterlagen beigefügten Untersuchungsbericht U 99 059 zur Brandschutzbeschichtung FLAMRO® ABA).

Durch die äußere Brandschutzbeschichtung des Schaumglases entsteht ein Brandschutzelement, dass, wie Versuche ergeben haben, bestens den entsprechenden Brandschutznormen gerecht wird.

Insbesondere hat sich dieses Brandschutzelement bei der Abdeckung von Befestigungsklemmen von sogenannten funktionserhaltenden Kabeln bewährt, da durch das erfindungsgemäße Element gewährleistet ist, dass der Kabelmantel im Bereich der Klemme nicht abbrennt und sich somit das Kabel nicht aus der Befestigungsklemme lösen kann.

Andere vorteilhafte Weiterbildungen ergeben sich aus den abhängigen Patentansprüchen.

Der Vollständigkeit halber wird noch auf folgenden, bekannten Stand der Technik hingewiesen:

Die DE 24 38 638 A1beschreibt eine als Brandschutzwand ausgebildete Fassadenwand, die einen Kern aus Schaumglas mit beidseitig tragenden Aussenschichten aufweist. Im Unterschied dazu, ist erfindungsgemäß ein selbsttragender Körper aus Schaumglas offenbart, auf dessen einer Oberseite eine nichttragende Brandschutzschicht aufgetragen ist.

Die DE 93 05 303 U1 beschreibt einen Datenträger-Sicherungsraum mit einer dreischichtigen Wand, wobei Aussen- und Innenwand aus Beton oder Mauerwerk und die Zwischenschicht aus Foamglas gebildet ist. Das Schaumglas hat auch hier keine tragende Funktion; diese wird vielmehr durch die Innen- und Aussenschicht realisiert.

In der DE 82 16 057 U1 ist eine Brandschutzbahn offenbart, die aus einer gewöhnlichen, nicht feuerhemmenden Dichtungsbahn und einer Flammschutzbahn aus Wasserglas gebildet ist. Auch hier ist die Flammschutzbahn nicht selbsttragend.

Die DE 38 78 091 T2 beschreibt eine wärmedämmende Schaumglasplatte mit einer verstärkten Hautschicht, die durch Erhitzen des Schaumglasblockes erzeugt wird. Eine zusätzlich aufgetragene Brandschutzschicht ist nicht offenbart, was insofern nicht wundert, als diese Platte zur Verkleidung von Gebäude wänden und nicht zum Brandschutz verwendet werden soll.

Das erfindungsgemäße Brandschutzelement einschließlich seiner vorteilhaften Weiterbildungen gemäß der abhängigen Patentansprüche wird nachfolgend anhand der zeichnerischen Darstellung verschiedener Ausführungsbeispiele näher erläutert.

Es zeigt
- Figur 1: im Schnitt das aus einem Körper gebildete erfindungsgemäße Brandschutzelement;
- Figur 2: im Schnitt das aus mehreren Einzelteilen gebildete erfindungsgemäße Brandschutzelement; und
- Figur 3: perspektivisch das als Brandschott (siehe DE 202 17 227 U1) ausgebildete Brandschutzelement.

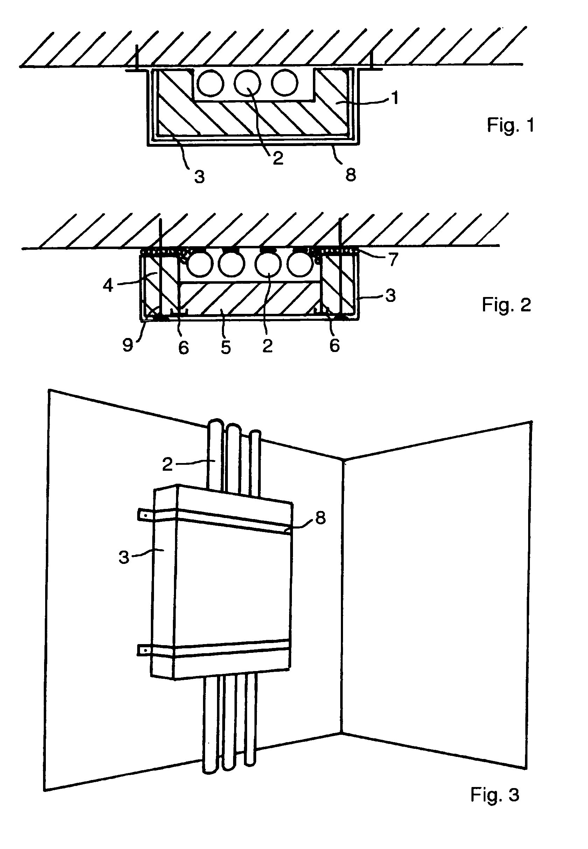

Das in den Figuren 1 bis 3 dargestellte Brandschutzelement besteht aus einem aus Schaumglas gebildeten Körper 1 zur Abdeckung oder Kapselung von Bauelementen 2 wie elektrischen Leitungen, elektischen Geräte, Verteilerdosen, Befestigungselementen von elektischen Leitungen oder Rohren. Je nach Anwendungsfall kann dieses Brandschutzelement wenige Zentimeter, aber auch mehrere Meter groß sein.

Wesentlich für dieses Brandschutzelement ist, dass zur Erhöhung der Feuerbeständigkeit des Brandschutzelements der Körper 1 mindestens an seiner dem Bauelement 2 abgewandten Seite mit einer Brandschutzschicht 3 versehen ist. Die Maßgabe "mindestens" bringt dabei zum Ausdruck, dass die Brandschutzschicht 3 auch beidseitig aufgebracht sein kann, was, da ohne weiteres vorstellbar, nicht extra dargestellt ist.

Wie bereits erwähnt, wird als Brandschutzschicht 3 vorzugsweise die Brandschutzbeschichtung FLAMRO® ABA verwendet. Diese ist als streich- oder auflackierbare Brandschutzbeschichtungsmasse ausgebildet und läßt sich auf diese Weise wahlweise schon bei der Herstellung des Brandschutzelements oder auch erst vor Ort bei der Montage auf den Körper 1 aufbringen.

Das in Figur 1 dargestellte Brandschutzelement besteht aus einem einzigen Körper 1, bei dem an der Stelle der Bauelemente 2 eine entsprechende Ausnehmung vorgesehen ist. Eine solche Ausnehmung kann aufgrund der leichten Bearbeitbarkeit von Schaumglas wahlweise vor Ort oder auch schon bei der Herstellung des Körpers 1 berücksichtigt werden.

Alternativ kann der Körper 1 aber auch, wie in Figur 2 dargestellt, aus mehreren Einzelteilen gebildet sein. In diesem Fall ist vorteilhaft vorgesehen, dass die Einzelteile 4, 5 mit Verbindungsmitteln 6, vorzugsweise metallischen Klammern, verbunden sind.

Ferner ist, wie in Figur 2 dargestellt, zur Abdichtung des Brandschutzelements vorteilhaft vorgesehen, dass in Spalten zwischen dem Körper 1 und einer begrenzenden Fläche (hier eine Wand) oder den Einzelteilen 4, 5 (hier nicht dargestellt) Brandschutzsilikon 7 angeordnet ist. Alternativ kommt auch mineralische Dämmwolle oder ein Dämmschichtbildner in Betracht.

Zur Befestigung an einer begrenzenden Fläche wie Wand, Decke oder Boden ist schließlich der Körper 1 mittels Befestigungselementen an dieser fixiert. Als Befestigungselemente sind wahlweise (siehe Figur 1) Bügelelemente 8 oder durch den Körper 1 geführte Schraubenelemente 9 vorgesehen (siehe Figur 2).

### Bezugszeichenliste

- 1: Körper
- 2: Bauelement
- 3: Brandschutzschicht
- 4: Einzelteil
- 5: Einzelteil
- 6: Verbindungsmittel
- 7: Brandschutzsilikon
- 8: Bügelelement
- 9: Schraubenelement

## Patentansprüche

1. Brandschutzelement, umfassend einen aus Schaumglas bestehenden Körper (1) zur Abdeckung oder Kapselung von Bauelementen (2) wie elektrischen Leitungen, elektischen Geräte, Verteilerdosen, Befestigungselementen von elektischen Leitungen oder Rohren,
**dadurch gekennzeichnet,**
**dass** zur Erhöhung der Feuerbeständigkeit des Brandschutzelements der Körper (1) mindestens an seiner dem Bauelement (2) abgewandten Seite mit einer Brandschutzschicht (3) versehen ist.

2. Brandschutzelement nach Anspruch 1,
**dadurch gekennzeichnet,**
**dass** die Brandschutzschicht (3) als streich- oder auflackierbare Brandschutzbeschichtungsmasse ausgebildet ist.

3. Brandschutzelement nach Anspruch 1 oder 2,
**dadurch gekennzeichnet,**
**dass** der Körper (1) aus mehreren Einzelteilen (4, 5) gebildet ist.

4. Brandschutzelement nach Anspruch 3,
**dadurch gekennzeichnet,**
**dass** die Einzelteile (4, 5) mit Verbindungsmitteln (6), vorzugsweise metallischen Klammern, verbunden sind.

5. Brandschutzelement nach einem der Ansprüche 1 bis 4,
**dadurch gekennzeichnet,**
**dass** in Spalten zwischen dem Körper (1) und einer begrenzenden Fläche oder den Einzelteilen (4, 5) wahlweise mineralische Dämmwolle, Dämmschichtbildner oder Brandschutzsilikon (7) angeordnet ist.

6. Brandschutzelement nach einem der Ansprüche 1 bis 5,
**dadurch gekennzeichnet,**
**dass** der Körper (1) an einer begrenzenden Fläche wie Wand, Decke oder Boden mittels Befestigungelementen fixiert ist.

7. Brandschutzelement nach Anspruch 6,
**dadurch gekennzeichnet,**
**dass** als Befestigungselemente wahlweise Bügelelemente (8) oder durch den Körper (1) geführte Schraubenelemente (9) vorgesehen sind.
